# EUROPEAN PATENT APPLICATION

(11) **EP 3 042 716 A1**
(43) Date of publication of application: **13.07.2016**
(21) Application number: 15150645.8
(22) Date of filing: 09.01.2015
(51) Int. Cl.: B01J 8/00, B01J 8/06

(54) **Apparatus for loading a plurality of particulate catalytic material**

(71) Applicant: Haldor Topsøe A/S, 2800 Kgs. Lyngby (DK)
(72) Inventor: Boe, Michael, 2930 Klampenborg (DK)

(57) **Abstract**

Apparatus for loading a plurality of different particle material, at least one being a catalyst into a catalyst bed or one or more catalyst tubes with varying relative concentration of the different particles.

## Description

The invention concerns an apparatus for loading particulate material in reactor tubes. More particularly, the invention relates to loading of two or more different particulate material, at least one being a catalyst in varying relative mixing ratio in reactor tubes in tubular reactors used for chemical reactions, in particular for formaldehyde plants.

Today in formaldehyde plants the reactor tubes are filled up with 3-5 different layers. The layers have different mixing ratios between catalyst and inert particles. In the first layer, located in the inlet end of the rector tube, 100% inert are used. In the last layer, located in the exit end of the reactor tube, 100% catalyst is used. In between the top and bottom layers, one or several intermediate layers with different mixing ratios between catalyst and inert particles are placed. If there is only one intermediate layer the mixing ratio could be 50% catalyst / 50% inert or 66% catalyst / 34% inert. If there are several intermediate layers with a mixture of catalyst and inert, these layers will have an increasing catalyst fraction the lower the layer is placed in the reactor tube.

The formaldehyde reaction is very exothermic, and the reactor tubes are consequently cooled by a boiling medium on the outside. In the first layer with inert material the inlet gas is heated up to reaction temperature. In the second layer with diluted catalyst the reaction starts and the temperature quickly peaks and then drops again towards the temperature of the boiling cooling medium cooling the reaction. The catalyst must be diluted to avoid a too high temperature peak, which would cause the formation of unwanted by-products. Further down in the catalyst tubes a higher concentration of catalyst is optimal because the gas composition is now less reactive, so the cooling from the outside can control the temperature, and avoid a too high temperature.

The most optimal solution would be to have a catalyst loading with a continuously changing catalyst concentration from 0% to 100%. Such concentration profile would best be optimised specifically to the reactor design and the kinetics of the catalyst. It is not just a simple linear concentration profile from 0% catalyst to 100% catalyst.

The reason why only a few layers of fixed catalyst concentration are used is that it is very time consuming to load many layers. To load a layer, the correct mixture of catalyst and inert must first be made available. Then for each tube the correct amount is measured out and installed manually or by loading machine in the reactor tube. The loaded tube is hereafter often marked with a coloured rubber plug. When all tubes are loaded and marked with rubber plug, then the next layer can be installed after the new mixture has been prepared. Reactors can have more than 10.000 tubes, so it is clearly considerably faster to load fewer layers than many.

Fast loading are done today with the help of loading machines, which simultaneously load maybe 10-20 tubes. However, a lot of time is still used to move the loading machine, keep track of which tubes have been loaded and prepare the relevant mixtures of catalyst and inert.

If catalyst loading time consumption was not an issue, then the performance of a catalyst tube filling with say 10 layers could come quite close to a reactor tube with the optimal catalyst concentration profile. A compromise is chosen between having a reasonable catalyst loading time consumption and having the optimally performing catalyst bed configuration.

DE 102012220930 describes a fixed bed reactor for carrying out catalytic gas-phase reactions. It comprises a bundle of vertical heat exchanger tubes whose lower and upper tube ends are respectively connected to at least one heat carrier distributor or heat carrier collector, a catalyst chamber for accommodating a catalyst bed, a reactor jacket which encloses the bundle of the heat exchanger tubes and the catalyst chamber, an upper- and lower reactor head which span the upper- and lower tube ends of the heat exchanger tubes, and a filling device for filling the catalyst chamber with a catalyst material. Fixed bed reactor for carrying out catalytic gas-phase reactions, comprises (a) a bundle of vertical heat exchanger tubes whose lower-and upper tube ends are respectively connected to at least one heat carrier distributor or heat carrier collector, (b) a catalyst chamber for accommodating a catalyst bed which abuts outer sides of the heat exchanger tubes, and is passed with a reaction gas during the operating condition of the fixed bed reactor, (c) a reactor jacket which encloses the bundle of the heat exchanger tubes and the catalyst chamber, (d) an upper- and lower reactor head which span the upper- and lower tube ends of the heat exchanger tubes and respectively the heat carrier distributor or the heat carrier collector, exhibit supply- and discharge pipes for feed- and product gas and/or the heat carrier, and are respectively tightly connected to the reactor jacket, and (e) a filling device for filling the catalyst chamber with a catalyst material, which is arranged above the catalyst chamber, and exhibits at least one catalyst distributor which is arranged outside the bundle of the heat exchanger tubes. The catalyst chamber is horizontally limited by a catalyst holder which is designed for horizontally holding the catalyst bed, and is limited vertically downwards by a catalyst support which is designed for vertically supporting the catalyst bed, and extends up to a predetermined height such that a dead space is formed between upper limit of the catalyst chamber and the upper tube ends of the heat exchanger tubes. Several filling tubes which with their upper tube ends open respectively in the catalyst distributor, and extend in the dead space, and with their lower tube ends open in the dead space. The course of all filling tubes is coordinated in the dead space such that, its entire lower tube ends is distributed over entire cross-section of the catalyst chamber.

WO14060669 is an invention relating to a device and method for densely and homogeneously loading catalyst into the annular space of bayonet tubes, used in a steam reforming reactor, said device using removable helical elements.

WO13160310 discloses a loading tray for loading particulate material into an array of substantially vertical tubes; wherein the loading tray comprises a plurality of loading tray elements, each loading tray element comprising at least one loading opening and at least some of the loading tray elements comprising at least two loading openings, the loading tray elements being fitted together to form an array of the loading openings.

US2004099572 describes a system and method for injecting catalyst into a fluid catalyst cracking (FCC) unit. In one embodiment, a system for injecting catalyst into an FCC unit includes at least one catalyst injection apparatus for providing catalyst to a fluid catalyst cracking unit, at least one sensor adapted to provide a metric indicative of the composition of a product stream produced in the fluid catalyst cracking unit, and a controller coupled to the sensor, for controlling the additions made by the catalyst injection system in response to the metric provided by the sensor. Another embodiment of the invention comprises a method for injecting catalyst from a catalyst injection system into a FCC unit that includes the steps of dispensing catalyst for a catalyst injection system into a fluid catalytic cracking unit, sensing an output in the fluid catalytic cracking unit, and automatically adjusting the amount of catalyst dispensed in response to the at least one sensed metric.

JP2007268373 provides a catalyst filling method capable of meeting even the automatic filling of a catalyst, and a catalyst filling device used therein. The catalyst filling method includes a supply step for supplying the catalyst to a reaction container internally demarcated into a first buffer space, a catalyst filling space and a second buffer space by providing a receiving member and a press member, an equalizing step for allowing an external force on the catalyst deposited in the reaction container to equalize the height of the deposition surface of the catalyst and a detection step for detecting whether the equalized deposition surface reaches a pre-set predetermined height position.

CN201728093U relates to a catalyst loading machine comprising a frame, wherein a flow guide conveying device is arranged above the frame, and a guide groove is transversely arranged above the flow guide conveying device in a penetrating manner; two catalyst chambers which are arranged left and right are arranged above the guide groove, and each of the catalyst chambers is internally and longitudinally provided with a loading metering device in a penetrating manner; one end of the loading metering device penetrates through the catalyst chamber and is connected with a handle, a plurality of baffle plates are arranged below the loading metering device, two ends of each of the baffle plates are respectively provided with a plurality of flow adjusting plates which are arranged forward and backward, each of the flow adjusting plates is arranged on the outer side wall of the frame, a diameter change flow guide pipe is connected below one of the flow adjusting plates, and the top of the diameter change flow guide pipe is provided with a flow guide plate; the diameter change flow guide pipe is connected with a flow guide hose which is connected with a flow guide pipe; and the bottom part of the frame is provided with a positioning pipe which is arranged beside the flow guide pipe. The catalyst loading machine has the advantages of simple structure, improvement of working efficiency and improvement of loading precision.

WO09080978 relates to a conveying device allowing particles to be transported from a hopper situated at ground level as far as the container, while at the same time protecting the particles from the weather and limiting the attrition thereof. To this end, it comprises a conveyor belt and a protective jacket, open at its ends and able to accommodate the conveyor belt. The conveyor belt is equipped with at least one containment skirt able to isolate from the interior wall of the jacket the particles that are being transported by one or more compartments of the conveyor belt. The invention also relates to a container loading installation using a conveying device according to the invention, and to a corresponding loading method.

US5626455 discloses a single tube catalyst loading device which consists of a transport belt system, electric motor, and catalyst loading hopper. Using this equipment, it is possible to control the drop rate of catalyst pellets without incurring mechanical damage or breakage of the catalyst. By raising or lowering the hopper section above the transport belt, it is possible to increase or decrease the drop rate of catalyst. Drop rate is the critical parameter in controlling catalyst density within the tubes of an ethylene oxide reactor.

US2001041117 shows a catalyst loading system for utilizing catalyst from a bulk supply located adjacent but not on the upper tube sheet of a catalytic reactor and for mechanized measuring of multiple identical quantities of catalyst and for mechanized loading of catalyst pellets into the reaction tubes of the reactor to achieve even drop rate, compaction and outage of the reaction tubes. From the bulk supply, multi-compartment catalyst charging hoppers are individually filled in rapid and accurately measured fashion by mechanized filling equipment having a predetermined sequence of operation that ensures accuracy of volumetric catalyst measurement. The charging hoppers are used for delivery of measured volumes of catalyst of a reactor tube loading mechanism which may take the form of a mobile cart framework being selectively positionable relative to the upper tube sheet and reaction tubes of a catalytic reactor to be charged with catalyst pellets. A pair of electronic vibrators is mounted to the cart framework and provide for support and vibratory movement of a vibratory tray having a catalyst feed hopper adapted to feed catalyst pellets to a plurality of generally parallel catalyst transfer troughs along which catalyst pellets are moved by vibration of the vibratory tray to a plurality of drop tubes. A compartmented hopper is fixed to the vibratory tray and controllably feeds catalyst pellets into respective catalyst transfer troughs. A plurality of charging tubes are connected to respective drop tubes by a plurality of elongate flexible tubes and are maintained in fixed, spaced relation by a structural element so as to define a charging manifold for simultaneous, timed delivery of catalyst pellets into a plurality of reactor tubes. The charging manifold has locator pins which are inserted into selected reactor tubes for orienting the charging tubes of the charging manifold with respect to a selected group of reaction tubes. A system is also provided for raising and lowering the charging manifold for efficiency of reactor tube charging operations. An electronic control system is effective for controlling the vibrators to achieve even drop rate from each of the catalyst transfer troughs and to control the vibrators responsive to catalyst weight to achieve even catalyst drop rate during an entire catalyst charging cycle.

The above-mentioned prior art does not disclose an apparatus which is able to automatically load and continuously change the relative concentration of a plurality of catalyst loaded into a reactor or reactor tube.

The present invention provides a solution to avoid the compromise which so far has been necessary to balance loading time and -cost against a proper catalyst concentration profile in a catalyst bed of a reactor as will be apparent in the following.

### SUMMARY OF THE INVENTION

It is an objective of the invention to provide a loading apparatus for filling a plurality of different particulate material, at least one being a catalyst in reactor tubes, with continuous varying relative concentration of the different particles in the catalyst bed according to a predetermined catalyst concentration profile.

It is a further objective to provide a loading apparatus, which is highly automated and therefore reduces the possibility of human errors and risk of reloading of reactor tubes.

The above objectives are achieved by the invention, which is a loading apparatus arranged to load at least two different particle materials, at least one being a catalyst into a catalyst tube in accordance with a predetermined catalyst profile, wherein the predetermined catalyst profile defines a concentration of each of the at least two different particle materials along the process gas flow direction within the catalyst tube. In formaldehyde reactors the two materials can be catalyst and inert material.

The loading apparatus must be kept supplied with the materials to be loaded by the operator, but will automatically dose the correct amount of all the different types of materials to create the predetermined catalyst concentration profile.

The loading apparatus must be programmable to supply any predetermined catalyst concentration profile. This can be done by changing mechanical components, egg. cams, controlling the dosing of each material, or it could be electronically control of a motor, vibrator or other means used to dose each of the different material types individually.

The summation of the different materials dosed is guided from the loading apparatus to the reactor bed, where it at the latest is mixed to create the concentration profile. In an embodiment the sub flows of materials are made to meet inside the loading apparatus, and travels as a mixed flow together to the catalyst bed.

A proposed embodiment of the invention would consist of two or more separate dosing stations each dosing a specific material type. Each dosing station can consist of a holding chamber for the material, a conveyer transporting a known amount of material per moved length of conveyer and a controller determining the speed of travel for the conveyer.

The conveyer in this setup can supply a programmable amount of material at any time in a loading sequence. One type of conveyer could be a moving band with numerous indentations, each picking up one material particle. The rotational speed of a motor driving the band can be controlled through the loading sequence to dose any predetermined amount at any time in the sequence. The flows from the two or more dosing stations are meeting up in a common funnel, and a hose is placed between the funnel outlet and the catalyst tube to guide the material into the catalyst tube.

The described loading apparatus can be used for simultaneous loading of a multitude of reactor tubes, preferably 10-20, if a multitude of funnels and guide hoses are employed. The moving band dosing the particles should then be made wide, and subdivisions of the band in the direction of band width made to supply the different funnels.

The ability to load a predetermined catalyst concentration profile makes it possible to have the most optimal temperature profile down through the reactor tube. This becomes possible for both heated and cooled reactions (endotherm and exothermal reactions). With proper knowledge of kinetics and by tailoring the catalyst concentration it can be determined how much heat is used or generated by the chemical reaction at any height in the catalyst tube. With knowledge of the heating or cooling on the catalyst outside we can now calculate the temperature in the catalyst.

In this way two significant advantages result:
- Higher product yields can be obtained when the optimum temperature is kept throughout the catalyst bed. At any given height in the catalyst bed, with the specific gas composition found at this location a temperature can be obtained, which gives the highest reaction rates
- Unwanted by-product at too high or too low temperatures can be avoided by keeping the catalyst temperature at any given height away from by-product forming temperatures.

It is noted that to some extent similar positive results could occur in a catalyst bed with a uniform catalyst concentration, if the heat transfer on the catalyst tube was varied. It is however more expensive and complicated to adjust the reactor geometry in such a way to obtain the needed variation of heat transfer along the catalyst tube.

The feature significant for obtaining the advantages is the possibility to program the loading machine to generate a predetermined catalyst concentration profile in the catalyst tubes. The storage of the programmed loading sequence could be electronically or mechanically. The optimal catalyst concentration profile is achieved by the synchronized operation of individual dosing stations, which dose a single type of material, and the subsequent collection of each sub stream into the total mixed stream, which is loaded into the catalyst tube.

### Features of the invention

1. A catalyst particle loading mechanism arranged to load at least two different particle materials, at least being a catalyst into at least one catalyst tube in accordance with a predetermined catalyst profile, wherein the predetermined catalyst profile defines a concentration of each of the at least two different particle materials along a process gas flow direction within the catalyst tube, wherein the loading mechanism comprises:
   - at least two dosing devices, one for each of the at least two different particle materials,
   - wherein the at least two dosing devices are individually controllable, and
   - wherein the at least two dosing devices are controlled so that the at least two different particle materials are mixed before entering or within the catalyst tube in accordance with the predetermined catalyst profile.
2. A catalyst particle loading mechanism according to feature 1, wherein a first dosing device is programmed to provide a first particle material corresponding to 100% concentration at a first end of the catalyst tube and corresponding to 0% concentration at a second end of the catalyst tube and a second dosing device is programmed to provide a second particle material corresponding to 0% concentration at a first end of the catalyst tube and corresponding to 100% concentration at a second end of the catalyst tube.
3. A catalyst particle loading mechanism according to any of the preceding features, wherein the at least two dosing devices are adapted to load a plurality of catalyst tubes concurrently, preferably the at least two dosing devices are adapted to load 10 - 20 catalyst tubes concurrently.
4. A catalyst particle loading mechanism according to any of the preceding features comprising two dosing devices.
5. A catalyst particle loading mechanism according to any of the preceding features comprising three dosing devices.
6. A catalyst particle loading mechanism according to any of the preceding features adapted to perform the mixing of the at least two different particle materials before they enter the catalyst tube.
7. A catalyst particle loading mechanism according to any of the preceding features adapted to perform the mixing of the at least two different particle materials within the catalyst tube.
8. A catalyst particle loading mechanism according to any of the preceding features, wherein the at least two dosing devices each are propelled by a motor, a vibrator or a cam.
9. A catalyst particle loading mechanism according to any of the preceding features, wherein each of the dosing devices comprises a moving band comprising numerous indentations adapted to contain particle material.
10. A catalyst particle loading mechanism according to feature 9, wherein each of the moving band comprises a plurality of series of indentations around the band, each series of indentations corresponding to a catalyst tube.
11. Use of the loading apparatus according to any of the preceding features for loading of particulate materials, at least one being a catalytic material in reactor tubes for chemical reactions.

### BRIEF DESCRIPTION OF THE DRAWINGS

Fig. 1 and 2 show side views of a loading apparatuses according to embodiments of the invention.
Fig. 3 shows a perspective view of a part of the loading apparatus according to an embodiment of the invention.

### DETAILED DESCRIPTION OF THE INVENTION

A proposed embodiment of the invention comprises two or more separate dosing stations each dosing a specific material type.

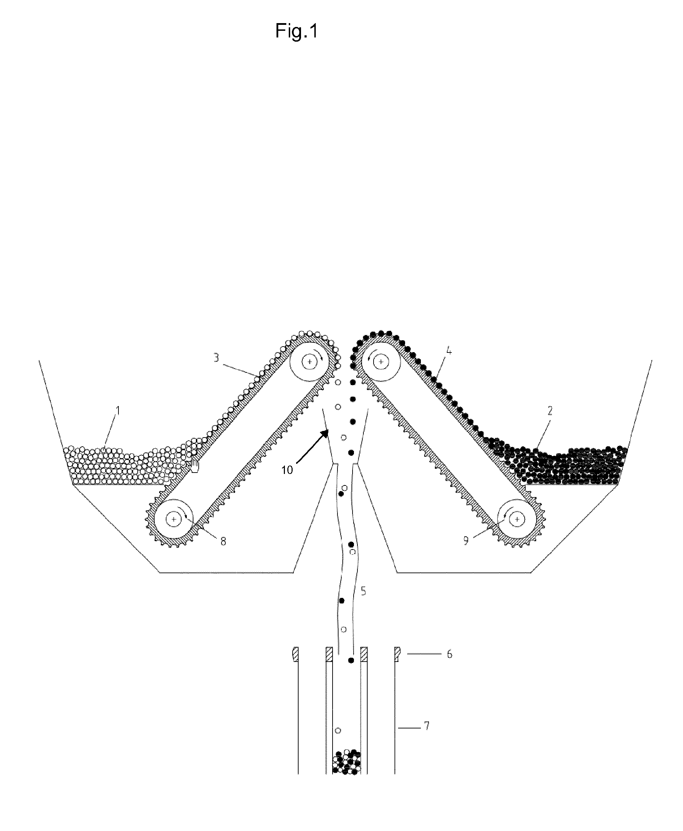

As seen on Fig. 1, each dosing station consists of a holding chamber for the material (1,2), which is kept filled by an operator with the material to be dosed by the specific dosing station.

The holding chamber has three side walls, and the remaining side wall is made up by a moving band, which is neither vertical nor horizontal, but positioned at an angle. The angle is chosen to be such that the material to be dosed, will slide down the moving band (3,4), except for the material caught in the indentations found in the moving band. The chamber is open at the top, so material can be poured into the chamber. The bottom of the chamber is made out by the moving band (3,4).

The moving band has numerous indentations sized to fill up with one particle of catalyst, when the moving band slide past under the chamber filled with material. Each individual indentation should never, or very rarely, remain empty or carry two or more particles from the chamber. Ideally when the band continues past and away from the chamber all indentations are filled up with one particle each. The moving band carries/moves the particles upwards to the upper edge of the band, where the band turns around and returns down. Here at the edge the particles fall out of the band and down into a funnel (10).

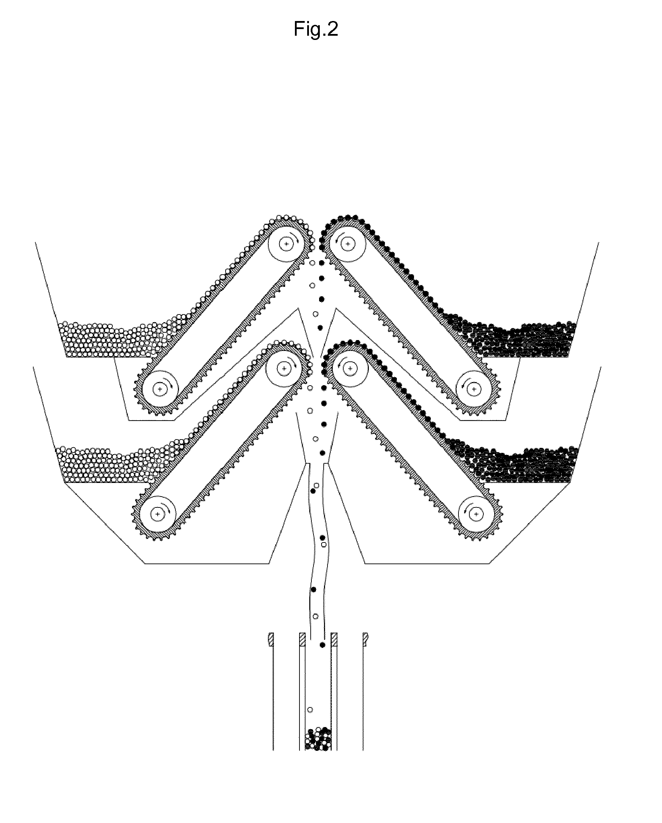

A minimum of two dosing stations, dosing different types of materials, are arranged facing each other and so that they can deliver the material dosed to the same funnel (10), meaning that at this point the two sub streams of materials are transformed to one mixed stream consisting of more than one type of material. Four or more dosing stations can be built together as shown in Fig. 2, by stacking the moving bands, and guiding the falling particles towards the common funnel.

A guide hose (5) transports the mixed stream of particles to the tube sheet (6), and the particles are allowed to fall into the catalyst tube (7).

The rotational speed (8,9) is controlled by programmable electrical motors, e.g. stepper motors, and decides the mixing ratio at all times of the different materials. The programming of the loading machine could happen via an on-board computer, which can store and execute a loading sequence upon the request by an operator. Prior to catalyst loading the optimal catalyst concentration profile for the given reactor and catalyst is calculated. The needed synchronized dosing sequence for all materials, which will yield the wanted concentration profile is then determined, and programmed into the loading apparatus.

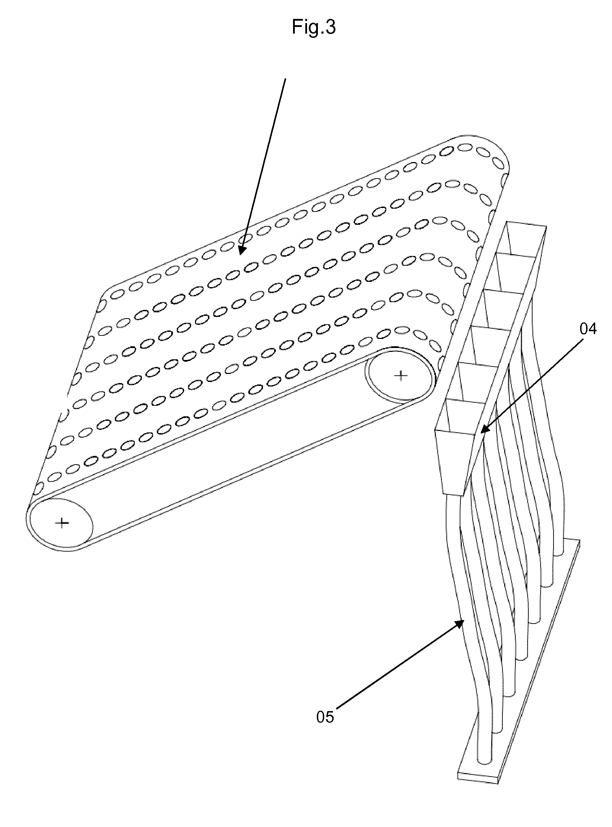

The loading apparatus can be built to load a multitude of tubes simultaneously. In Fig 3. is shown the principle of a loader filling five catalyst tubes at the time. Only one dosing station is shown, where only the wide moving band, the five funnels and five hoses are shown. The multitude of hoses can be collected in a holder, which is sized/shaped to fit the pattern in the tube sheet. This will allow a faster positioning of the hoses into the catalyst tubes in the tube sheet.

## Claims

1. A catalyst particle loading mechanism arranged to load at least two different particle materials, at least being a catalyst into at least one catalyst tube in accordance with a predetermined catalyst profile, wherein the predetermined catalyst profile defines a concentration of each of the at least two different particle materials along a process gas flow direction within the catalyst tube, wherein the loading mechanism comprises:
- at least two dosing devices, one for each of the at least two different particle materials,
- wherein the at least two dosing devices are individually controllable, and
- wherein the at least two dosing devices are controlled so that the at least two different particle materials are mixed before entering or within the catalyst tube in accordance with the predetermined catalyst profile.

2. A catalyst particle loading mechanism according to claim 1, wherein a first dosing device is programmed to provide a first particle material corresponding to 100% concentration at a first end of the catalyst tube and corresponding to 0% concentration at a second end of the catalyst tube and a second dosing device is programmed to provide a second particle material corresponding to 0% concentration at a first end of the catalyst tube and corresponding to 100% concentration at a second end of the catalyst tube.

3. A catalyst particle loading mechanism according to any of the preceding claims, wherein the at least two dosing devices are adapted to load a plurality of catalyst tubes concurrently, preferably the at least two dosing devices are adapted to load 10 - 20 catalyst tubes concurrently.

4. A catalyst particle loading mechanism according to any of the preceding claims comprising two dosing devices.

5. A catalyst particle loading mechanism according to any of the preceding claims comprising three dosing devices.

6. A catalyst particle loading mechanism according to any of the preceding claims adapted to perform the mixing of the at least two different particle materials before they enter the catalyst tube.

7. A catalyst particle loading mechanism according to any of the preceding claims adapted to perform the mixing of the at least two different particle materials within the catalyst tube.

8. A catalyst particle loading mechanism according to any of the preceding claims, wherein the at least two dosing devices each are propelled by a motor, a vibrator or a cam.

9. A catalyst particle loading mechanism according to any of the preceding claims, wherein each of the dosing devices comprises a moving band comprising numerous indentations adapted to contain particle material.

10. A catalyst particle loading mechanism according to claim 9, wherein each of the moving band comprises a plurality of series of indentations around the band, each series of indentations corresponding to a catalyst tube.

11. Use of the loading apparatus according to any of the preceding claims for loading of particulate catalytic material in reactor tubes for chemical reactions.
